# EUROPÄISCHE PATENTANMELDUNG

(11) **EP 2 549 405 A1**
(43) Veröffentlichungstag der Anmeldung: **23.01.2013**
(21) Anmeldenummer: 11174768.9
(22) Anmeldetag: 20.07.2011
(51) Int. Cl.: G06K 9/00, G06Q 10/00

(54) **Verfahren zur Aufteilung einer Gruppe von Personen in mehrere Zielgruppen**

(71) Anmelder: Harbig, Tim, 44269 Dortmund (DE)
(72) Erfinder: Harbig, Tim, 44269 Dortmund (DE)
(74) Vertreter: Tarvenkorn, Oliver

(57) **Zusammenfassung**

Die Erfindung betrifft ein Verfahren zur Aufteilung einer Gruppe von Personen in mehrere Zielgruppen Z₁₋ₙ anhand biometrischer Identifikationsbilder, wie eines Fingerabdrucks, wobei die Gesamtgröße der Gruppe unbestimmt sein kann und wobei die relative Größe W_{soll,i} der Zielgruppen Zᵢ vorbestimmbar ist.

Ausgehend von einer gewünschten relativen Größe W_{soll*,i} jeder Zielgruppe Zᵢ in einer Menge von n Zielgruppen Z₁₋ₙ wird maschinengesteuert aus in einer Datenbank gespeicherten Erfahrungswerten ermittelt, welche Grundmuster des biometrischen Identifkationsbildes bekanntermaßen auftreten und welche davon einzeln oder in Kombination miteinander als Kriterium ausgewählt werden können, um bestimmte Personen, die erwartungsgemäß diese Merkmale besitzen werden, bestimmten Zielgruppen zuzuordnen und darüber die gewünschte Zielgruppenverteilung zu erhalten.

## Beschreibung

Die Erfindung betrifft ein Verfahren zur zufälligen Aufteilung einer Gruppe von Personen in mehrere Zielgruppen, wobei die Gesamtgröße der Gruppe unbestimmt sein kann und wobei die relative Größe der Zielgruppen vorbestimmbar ist.

In zahlreichen Anwendungsfällen ist es erforderlich, eine Gruppe von Personen nach zufälligen Prinzipien in mehrere Zielgruppen aufzuteilen.

Beispielsweise müssen Probanden einer Testgruppe für das Testen eines neuen pharmazeutischen Präparats in Gruppen aufgeteilt werden. Die einzelnen Untergruppen erhalten dann beispielsweise den zu testenden Wirkstoff in unterschiedlichen Dosierungen, während eine Vergleichsgruppe mit Placebos oder bereits bekannten Stoffen getestet wird. Eine Aufteilung der Gesamtgruppe nach dem Zufallsprinzip ermöglicht hierbei, dass die Zuordnung frei von subjektiven Auswahlkriterien derjenigen Personen ist, die den Test leiten und erst recht von den Probanden nicht beeinflussbar ist.

Ein weiteres Beispiel ist die Teilnahme an Glücksspielen. Im Falle einer Tombola beispielsweise besitzen die Personen ein Los, das mit einer individuellen Kennung wie einer Zahl versehen ist. Aus der Gesamtzahl der vergebenen Lose werden dann in bekannter Weise die Gewinner ausgelost und den Gewinnrängen zugeordnet.

Ein weiteres Anwendungsbeispiel ist die Durchführung von Umfragen zum Zwecke der Marktforschung. Auch hierbei kann es ein Erfordernis sein, eben nicht von vornherein die Testpersonen nach bestimmten Kriterien gezielt auszuwählen, sondern nach Zufallsprinzipien, wobei im Sinne der vorliegenden Erfindung eine Zufälligkeit nicht zwangsläufig eine Auswahl nach den Gesetzen der Stochastik bedeutet, sondern dass es sich um ein Aufteilungsverfahren handelt, das weder von den Probanden in der aufzuteilenden Gruppe beeinflussbar ist noch von Personen, die als Testleiter agieren.

Bei den angeführten Beispielen gilt aber stets, dass für eine nicht-subjektive Aufteilung der Gesamtgruppe in mehrere Zielgruppen über eine Zufallsauswahl die Gesamtgröße der Gruppe der Personen oder der von ihnen inne gehaltenen Losen oder anderen Codes vor ihrer Aufteilung in die Zielgruppen bzw. Gewinnklassen feststehen muss. Nur dann kann durch Aufstellung von bestimmten Kriterien für die Zielgruppenzuordnung erreicht werden, dass die gewünschte Größenverteilung der Zielgruppen in der Praxis erreicht wird.

Werden beispielsweise an die Ausgangsgruppe Lose vergeben, deren Endziffern genau zu gleichen Teilen vergeben sind, so dass also eine Auftretenswahrscheinlichkeit von genau 10% für jede Endziffer besteht, dann kann durch eine Bündelung mehrerer Endziffern zu einer Zielgruppe deren Größe auf 20% - 90% erhöht werden. Nehmen aber Personen, die bereits ein Los erhalten haben, an der Ziehung doch nicht mehr teil, dann sind einzelne Zielgruppen unterbesetzt. Werden noch nachträglich einzelnen Personen zusätzliche Lose ausgehändigt, obwohl das Gewinnspiel bereits begonnen wurde, dann wird die gewünschte Zielgruppenverteilung ebenfalls nicht erreicht.

Bei Auswahlsystemen wie einer Tombola muss also die Gesamtheit aller auswählbaren Elemente vorher feststehen, sprich: es müssen erst alle Lose ausgegeben sein, bevor die Ziehung, also die Aufteilung der Gruppe der Losinhaber in mehrere Zielgruppen entsprechend den Gewinnrängen, beginnen kann, denn andernfalls wird die über die Lose vorzugebende Zielgruppengröße nicht erreicht.

Nimmt man hingegen spontan generierte Zufallszahlen zur Auswahl, dann sind diese zwar beliebig ergänzbar, so dass auch nachträglich zur Ausgangsgruppe hinzutretende Personen über die Zufallszahl in eine Zielgruppe eingeordnet werden können. Der Nachteil besteht jedoch darin, dass sich die theoretisch berechnete Zielgruppenverteilung in der Praxis erst bei sehr großen Ausgangsgruppen einstellt. Bei kleinen Gruppengrößen kann jedoch die eine oder andere Zielgruppe öfter oder seltener repräsentiert sein, als nach den stochastischen Gesetzmäßigkeiten zu erwarten ist.

Eine zufällige Auswahl im Sinne eines stochastischen Ergebnisses hat also den Nachteil, dass entweder die aufzuteilende Gruppe von vornherein in ihrer Größe und mit ihrem Inhalt, beispielsweise der Gesamtmenge aller Lose, bestimmt sein muss, so dass eine Auswahl im Sinne einer Tombola zu treffen ist, oder aber, dass eine zufällige Vergabe von Kriterien zur Aufteilung der Gruppe in mehrere Zielgruppen bei einer kleinen Gruppengröße zu einer unregelmäßigen Verteilung führen kann.

Aufgabe der vorliegenden Erfindung ist somit, ein Verfahren zur Aufteilung einer Gruppe von Personen in mehrere Zielgruppen anzugeben, das es ermöglicht, ohne Kenntnis der Größe der Gruppen dennoch eine relative Größe für jede Zielgruppe angeben zu können und zu bewirken, dass - unter Berücksichtigung einer gewissen Toleranzschwelle - die vorgegebene Gruppengröße erreicht wird.

Dies wird erreicht durch ein Verfahren mit den Merkmalen des Patentanspruchs 1.

Der Erfindung liegt der Grundgedanke zugrunde, mit Hilfe einer elektronischen Leseeinrichtung ein biometrisches Identifikationsbild der Personen in der aufzuteilenden Gruppe einzulesen, daran bestimmte Musterstrukturen festzumachen und anhand der erfassten Musterstrukturen die Zuordnung der Person in eine der Zielgruppen vorzunehmen.

"Identifikationsbild" bedeutet im Sinne der vorliegenden Erfindung, dass es sich um ein elektronisches Abbild der ausgewählten Körpermerkmale oder einen Datensatz mit den ausgewählten Körpermerkmalen handelt, welche beim Abtasten des Körpers maschinell gewonnen werden können. Dabei muss es sich nicht um ein optisches Abbild handeln, sondern es kann auch ein bereits maschinell vorbearbeiteter Datensatz sein, der die vom Körper der Person extrahierten Daten enthält. Im Falle der Verwendung eines Fingerabdrucks beispielsweise kann das Identifikationsbild entweder die optische Wiedergabe der Fingerkuppe in einem digitalen Datenformat sein oder es kann eben ein in bestimmter Weise formatierter Datensatz sein, der die aus dem Fingerabdruck gewonnenen Merkmale enthält. Auch eine aus Körpergewebe oder Körperflüssigkeiten gewonnene Gensequenz wäre ein "Identifikationsbild" in diesem Sinn.

Der Rückgriff auf ein biometrisches Identifikationsbild bringt folgende Vorteile mit sich:
Es gibt naturgegebene Grundmuster innerhalb der Identifikationsbilder, die in der aufzuteilenden Gruppe von Personen auf jeden Fall auftreten, oder aber bei denen das Nicht-Vorhandensein ein zusätzliches charakteristisches Merkmal an sich ist.

Ein Grundmuster besteht bei jedem Mitglied der Gruppe von Personen, und zwar ganz unabhängig davon, ob die Person Kenntnis hat, dass sie an einem Auswahlverfahren teilnimmt oder nicht. Im übertragenen Sinne bringt quasi jede Person in der aufzuteilenden Gesamtgruppe ihr persönliches Tombola-Los von vornherein mit. Dies gilt ganz gleich, ob die Gruppe überhaupt über den ursprünglichen Umfang wächst oder in welchem Umfang sie wächst.

Gemäß der Erfindung ist es somit möglich, auch eine kleine Gruppe von Personen in mehrere Zielgruppen aufzuteilen, deren jeweilige relative Größe der Vorgabe entspricht. Genauso ist es erfindungsgemäß möglich, sehr große Gruppen aufzuteilen. Entscheidend ist aber, dass mit dem erfindungsgemäßen Verfahren unter Nutzung einer Datenverarbeitungsanlage und eines elektronischen Lesegeräts für biometrische Merkmale die Gruppengröße während der bereits laufenden Aufteilung noch weiter anwachsen kann und weder durch die Teilnehmer noch durch die Leitungspersonen der Auswahlprozedur beeinflussbar ist.

Als biometrisches Identifikationsbild sind solche Ausprägungen des Körpers geeignet,
- die geeignet sind, verfälschungssicher Personen voneinander zu unterscheiden,
- die mit einer elektronischen Leseeinrichtung erfassbar sind und
- die in einer hinreichend großen Zahl von Ausprägungen mit genügend hoher Auftretenswahrscheinlichkeit vorkommt, um überhaupt eine Aufteilung in mehrere Zielgruppen vornehmen zu können.

Der Vorteil der Erfindung besteht weiterhin darin, dass zumindest für bestimmte ethnische Personengruppen die Häufigkeitsverteilung des Auftretens dieser Grundtypen der Identifikationsbilder bekannt ist, so dass das Verfahren der Erfindung auf den gegebenen Häufigkeitsverteilungen aufbauend die individuelle Zielgruppenzuordnung vornehmen kann.

Im Gegensatz zu herkömmlichen Auswahlverfahren bzw. Gewinnspielen, die beispielsweise auf der vorherigen Ausgabe von Ausweisen bzw. Losen beruhen, ist eine ungewollte Übertragung von einer Person auf die andere bei dem erfindungsgemäßen Verfahren ausgeschlossen, weil es eben auf der Verarbeitung biometrischer Identifikationsbilder basiert. Damit ist das Verfahren der Erfindung manipulationssicher.

Das erfindungsgemäße Verfahren in seiner einfachsten Ausführungsform wird wie folgt beschrieben:

Im Rahmen eines Gewinnspiels in einer Verkaufsstätte sollen die teilnehmenden Personen Gewinne wie Einkaufsgutscheine oder Sachpreise erhalten. Die relative Verteilung der Gewinngruppen ist vorbestimmt. Hochwertige Preise sollen eine Besonderheit darstellen und deshalb nur selten vergeben werden. Die Gesamtgröße ist zu Beginn des Verfahrens jedoch unbekannt, da es für solche Aktionen typisch ist, dass zu Beginn nur eine kleine Gruppe anwesend ist und je nach Kundenfrequenz mehr oder weniger viele Personen hinzutreten.

Als biometrisches Identifikationsbild wird ein elektronischer Fingerabdruckscan einer beliebigen Fingerkuppe verwendet.

Im einfachsten Fall hat die Leitungsperson vor Beginn die Zielgruppengrößen so festgelegt, dass sie, mit einer gewissen Toleranz, genau der Verteilung der Grundmustertypen am Fingerabdruck entsprechen. In diesem einfachen Fall wird in der Analyseeinrichtung lediglich eine 1:1-Zuordnung der Grundmuster zu den Zielgruppen Zᵢ vorgenommen.

Im laufenden Verfahren wird dann jede teilnehmende Person der Ausgangsgruppe einer Leseeinrichtung zugeführt, die das biometrische Identifikationsbild erfasst. Zum Beispiel wird ein an sich bekannter Fingerabdruckscanner verwendet.

Anschließend wird das erfasste Merkmalsabbild in der Datenvereinbarungseinrichtung analysiert und einer bestimmten Grundmustergruppe W_{pattern, i} zugeordnet, wobei die oben angeführte, relative Verteilung der Auftretenswahrscheinlichkeit der einzelnen Grundmuster W_{pattern, i} naturgegeben ist und dadurch in gewissen Grenzen vorbekannt ist.

Bei einer Person aus der Gruppe von Gewinnspielteilnehmern wird also in der Analyseeinrichtung in dieser Ausführungsform des Verfahrens nur das Grundmuster und nicht die individuellen Merkmale des Fingerabdrucks erfasst und die Zielperson wird anhand dieses Grundmusters in eine der Gewinngruppen eingeordnet oder es wird eine andere Handlungsanweisung, die dieser Zielgruppe zugeordnet ist, ausgeführt.

Der Vorteil liegt darin, dass jede weitere hinzukommende Person auch eines der Grundmuster an ihrem Fingerabdruck besitzt, so dass es unerheblich ist, ob das Gewinnspiel nur mit einer kleinen Gruppe von beispielsweise 10 Personen gestartet wird, oder ob die Gruppe im Laufe der Durchführung der Gewinnspielaktion noch auf mehrere tausend Teilnehmer anwächst.

In der aus der Mathematik und Informatik bekannten Weise werden im Folgenden Bedingungsdefinitionen, Gruppenbezeichnungen und Aktionen bzw. Handlungen indiziert.

Der Index "i" gibt die Zuordnung der Person bzw. der ausgewählten Merkmale ihres Identifikationsbildes zu der jeweiligen Zielgruppe Zᵢ an und kennzeichnet die zu dieser Zielgruppe Zᵢ weiterhin gehörenden tatsächlich gemessenen Größenverteilungen W_{ist,i} bzw. die zu erwartenden oder gewünschten Wahrscheinlichkeiten W_{soll,i}.

Der Index "1-n" wird im Folgenden als Abkürzung verwendet, um die Folge vom ersten bis zum n-ten Element einer Gruppe zu kennzeichnen. Der Index i dient auch als eine Laufvariable für den aktuellen Wert innerhalb der Folge von möglichen Werten 1 bis n. Es steht also z.B. "H₁₋ₙ" als Abkürzung für die Folge der Handlungen H₁ ... Hₙ.

An einem einfachen Beispiel, bei dem das Verfahren mit sechs Zielgruppen Z₁₋₆ durchgeführt wird, wird die verwendet Terminologie erläutert:
- Der Index i gibt die Nummer der Zielgruppe Zᵢ an, z.B. i=3.
- Z₁₋₆ bedeutete, dass es sechs Zielgruppen von Z₁ bis Z₆ gibt.
- W_{soll,i} kennzeichnet die relative Größe der 3. Zielgruppe Z₃ innerhalb der Gesamtzahl der Zielgruppen Z₁ bis Z₆.

In dem einfachen Fall, der hier zunächst beschrieben ist, stimmen die Indizes "i" der Zielgruppen Zᵢ auch noch mit den Indizes der jeweils zugeordneten Grundmusterklassen überein, ansonsten kann ein anderer Index wie z.B. "j" verwendet werden. Wₚₐₜₜₑᵣₙ,₃ kennzeichnet also zum Beispiel bei den Fingerabdrücken die relative Größe der 3. Grundmusterklasse.

Der einfachste Fall bei dem erfindungsgemäßen Verfahren stellt sich also wie folgt dar:
Eine Person lässt ihren Finger scannen. Die Datenverarbeitungseinrichtung ermittelt daraus einen Fingerabdruck der fünften Grundmusterklasse W_{pattern,5}. Dieser Grundmusterklasse W_{pattern,5} ist auch die fünfte Zielgruppe Z₅ zugeordnet. Zur fünften Zielgruppe Z5 gibt es auch eine zugehörige Handlungsanweisung H₅.

Dies ist aber nicht zwangsläufig so. Bei den anderen nachfolgend beschriebenen Verfahrensvarianten können jedoch auch mehrere Grundmusterklassen einer Zielgruppe zugeordnet sein: Z.B. wird dann beispielsweise ein Fingerabdruck, der dem dritten Grundmuster W_{pattern,3} entspricht, und auch ein Fingerabdruck, der dem vierten Grundmuster W_{pattern,4} entspricht, in die zweite Zielgruppe Z₂ eingeordnet, je nachdem, wie die Zuordnungsregeln aufgestellt wurden.

Vorzugsweise ist das biometrische Charakterisierungsmerkmal ein Fingerabdruck, wie an dem obigen Ausführungsbeispiel beschrieben. Fingerabdrücke sind, wie in der Kriminalistik bekannt, dazu geeignet, Menschen mit jeglicher Herkunft voneinander zu unterscheiden. Eines von fünf Grundmustern, den sogenannten Pattern, sowie weitere Charakterisierungsmerkmale, sogenannte Minuzien, sind innerhalb des Fingerabdrucks stets vorhanden.

Selbst wenn ein Fingerabdruck aufgrund einer früheren Verletzung der Fingerkuppe nicht mehr in der natürlichen Ausprägung besteht, kann die Person trotzdem in die Ausgangsgruppe aufgenommen werden, indem z.B. einfach ein anderer Finger abgebildet wird.

Andere Identifikationsbilder können sein:
- eine Aufnahme der Iris des menschlichen Auges,
- körpereigene Gerüche
- biometrische Merkmale im Gesichtsfeld wie beispielsweise Abstände zwischen Mund, Nasenspitze, Nasenwurzel oder Augen oder
- eine Gensequenz.

Vorzugweise ist bei dem erfindungsgemäßen Verfahren vorgesehen, eine Duplikatprüfung vorzunehmen. Hierzu wird im Zuge der Durchführung immer ein bestimmter Fingerabdruck verwendet, z.B. der Zeigefinger der rechten Hand. Der gescannte Fingerabdruck und/oder die daran erfassten individuellen Merkmale des Fingerabdrucks werden in einer Datenbank gespeichert.

Diese aus der Kriminalistik an sich bekannte Vorgehensweise, dient dazu, die doppelte Teilnahme derselben Person am Auswahlverfahren zu verhindern. Handelt es sich beispielsweise um ein Auswahlverfahren im Rahmen eines Gewinnspiels, dann wird verhindert, dass die Person mehrere Preise erhalten kann.

Gelangt eine Person, die bereits zuvor teilgenommen hat, ein weiteres Mal zu der Lesereinrichtung, so wird in der Analyseeinrichtung vor der Zuordnung zu den Zielgruppen ein Vergleich mit allen bisher in der Datenbank hinterlegten Datensätzen vorgenommen. Wird eine Übereinstimmung mit einem bereits gespeicherten Datensatz festgestellt, so nimmt die Analyseeinrichtung im Folgenden keine Zuordnung mehr zu einer der Zielgruppen vor, was praktisch bedeutet, dass die Person an dem Gewinnspiel kein zweites Mal teilnehmen kann.

Das Verfahren gemäß der Erfindung kann weitere vorteilhafte Ausgestaltungen besitzen, die es einmal ermöglichen, die Zielgruppenverteilung genauer an die ausgangsseitig vorgegebene Zielwahrscheinlichkeit anzunähern. Weitere vorteilhafte Ausgestaltungen dienen dazu, Merkmalskombinationen zu definieren, um Zielwahrscheinlichkeiten verarbeiten zu können, die in stärkerem Maße von der natürlichen Verteilung der Grundmustertypen abweichen oder deren Anzahl größer oder kleiner als die Anzahl der Grundmuster ist.

Zunächst sollen die bevorzugten zusätzlichen Verfahrensschritte beschrieben werden, die der Genauigkeitsverbesserung dienen:
In einer vorteilhaften Ausprägung des erfindungsgemäßen Verfahrens wird in der Verarbeitungseinrichtung nicht nur die Zuordnung des erfassten Identifikationsbilds zu einer der Zielgruppen vorgenommen, sondern es wird die in der Gesamtheit der Gruppe auftretende Verteilung des Grundmusters und ggf. die Verteilung der weiteren zur Charakterisierung herangezogenen individuellen Merkmale laufend aktualisiert, indem die ermittelten Werte in eine Datenbank geschrieben werden. Es wird dann ein Vergleich zwischen den festgestellten Wahrscheinlichkeiten für das Auftreten jeder Merkmalskombination W_{ist,i} mit den zu Beginn des Verfahrens angenommenen, auf Erfahrungswerten basierenden Verteilungen.

So ist es beispielsweise bekannt, dass bei einem Fingerabdruck bestimmte Grundmuster innerhalb bestimmter ethnischer Gruppen häufiger auftreten als in anderen ethnischen Gruppen. Dadurch können sich unterschiedliche Verteilungen danach ergeben, an welchem geographischen Ort bzw. innerhalb welcher Bevölkerungsgruppe das Verfahren durchgeführt wird.

Die zugrunde liegende Verteilung der Grundmuster und/oder der individuellen Merkmale wird dann nach einer konfigurierbaren Anzahl von Durchläufen angepasst und in angepasster Form wieder in der Datenbank hinterlegt, so dass bei einer erneuten Durchführung des Verfahrens im gleichen Umfeld eine verbesserte Genauigkeit ereicht wird. Eine weitere vorteilhafte zusätzliche Variante des erfindungsgemäßen Verfahrens sieht vor, eine hier als Delta-Korrektur bezeichnete Überprüfung der Abweichung der Ist-Wahrscheinlichkeiten W_{ist,i} für das Auftreten bestimmter Merkmalskombinationen von den Soll-Wahrscheinlichkeiten W_{soll,i} vorzunehmen und danach mit Hilfe der Datenverarbeitungseinrichtung die Zielgruppengröße derart zu beeinflussen, dass ihre tatsächliche Verteilung der gewünschten Soll-Verteilung W_{soll,i} angenähert wird. Diese Korrektur setzt ebenfalls nach einer manuell konfigurierbaren Anzahl von Durchläufen ein.

Die Anzahl der Durchläufe, nach welcher eine Korrektur erfolgt, kann eine feste Größe sein.

Es kann aber auch eine zufällige Anzahl von Durchläufen durch einen zusätzlichen Zufallsgenerator innerhalb der Datenverarbeitungseinrichtung vorgegeben werden.

Aufgrund der Tatsache, dass die Korrektur automatisch und ohne Bedienereingriff abläuft, besteht bei dem erfindungsgemäßen Verfahren wiederum eine Manipulationssicherheit, auch wenn durch den Eingriff der Datenvereinbarungsanlage die stochastische Verteilung des Auftretens bestimmter Merkmalskombinationen aktiv manipuliert wird, um die gewünschte Zielgruppengröße zu erreichen. Da aber das Auftreten eines Korrekturwertes schon an sich nicht vorherbestimmbar ist und auch die automatisch durchgeführte Korrektur vom Bediener nicht nach Belieben ausgelöst werden kann, besteht eine hohe Sicherheit dahingehend, dass eine subjektive Beeinflussung durch den Bediener vermieden wird.

Bei dem sogenannten Delta-Korrekturverfahren wird also während der Durchführung des Verfahrens, also beispielsweise während der Durchführung der Gewinnspielaktion, geprüft, wie groß die Abweichungen der über die Gesamtheit der teilnehmenden Personen ermittelte Wahrscheinlichkeit W_{ist,i} zu W_{soll,i} für die jeweiligen Zielgruppen sind.

Die Werte W_{ist,i} berechnen sich als Verhältnis der Anzahl der in die jeweilige Zielgruppe Zᵢ eingeordneten Personen zur Gesamtzahl aller Personen, die bisher an dem Durchlauf teilgenommen haben, in allen Zielgruppen zusammen.

Wenn die Abweichungen innerhalb eines konfigurierbaren Toleranzfeldes liegen, dann wird ganz normal geprüft, in welche der Zielgruppen Z₁₋ₙ die Person anhand der geprüften Merkmale einzuordnen ist und es wird die zu der jeweiligen Zielgruppe Zᵢ korrespondierende Handlung Hᵢ aus der Vielzahl der möglichen Handlungen H₁₋ₙ vorgenommen.

In einfachen Worten bedeutet dies, dass die innerhalb der Zielgruppe tatsächlich bestehende, messbare Verteilung mit den theoretisch zu erwarteten Wahrscheinlichkeiten für das Auftreten der definierten Merkmale übereinstimmt. Deshalb brauchen die erfassten Identifikationsbilder nur anhand der in der Vorprozedur aufgestellten Kriterien, z.B. dem Auftreten bestimmter Grundmuster, zu den einzelnen Zielgruppen zugeordnet werden.

Wird hingegen bei der Durchführung des Delta-Korrekturverfahrens im Rahmen der Hauptprozedur festgestellt, dass die gemessenen Verteilungen W_{ist,1-n} außerhalb des zulässigen Toleranzbereichs liegt, dann wird diejenige Handlung vorgenommen ausgespielt, bei der die negative Abweichung zwischen W_{ist,i} und W_{soll,i} am größten ist.

Mit anderen Worten wird also diejenige Zielgruppe herausgesucht, deren bisher aufgetretene Häufigkeit gegenüber den vor dem Start der Hauptprozedur definierten theoretischen und/oder auf zuvor gespeicherten Erfahrungswerten beruhenden Erwartungen am kleinsten ist, und diese Zielgruppe wird dann durch die Datenverarbeitungseinrichtung sozusagen künstlich aufgefüllt:
Hat beispielsweise die dritte Zielgruppe W_{soll,3} eine Auftretenswahrscheinlichkeit entsprechend der zu erwartenden Häufigkeit des Auftretens des Grundmusters W_{pattern,3} bei den Fingerabdrücken von W_{pattern,3}=27,9%, und wird dann festgestellt, dass in der bisher ausgewerteten Gesamtgruppe von Personen die Merkmalskombination für die dritte Gruppe nur mit einer Wahrscheinlichkeit von W_{ist,3}=22% vorliegt, dann werden solange weitere Personen in diese unterrepräsentierte dritte Zielgruppe eingeordnet, bis diese wieder in der Toleranzgrenze liegt. Dies gilt gerade auch dann, wenn die bei dem Fingerabdruck der Personen gegebenen Merkmale eigentlich nicht zu einer Einordnung in genau dieser Zielgruppe führen würde.

Die übliche Zuordnungsprozedur wird also in dem automatischen Prozess zeitweilig umgangen.

Auch bei der beschriebenen Verfahrensvariante mit der Selbst-Korrektur sind Unterausprägungen denkbar, um die Genauigkeit zu verbessern und die Manipulationssicherheit zu erhöhen.

So könnte beispielsweise vorgesehen sein, dass die unterrepräsentierte Gruppe sukzessive so lange aufgefüllt wird, bis die gemessenen Verteilungen W_{ist,i} wieder mit den Zielwahrscheinlichkeiten W_{soll,i} übereinstimmen.

Weiterhin kann vorgesehen sein, nicht jede nachfolgende Person in die unterrepräsentierte Gruppe einzuordnen, sondern zwischendurch die übliche Grundverteilung nach den in der Vorprozedur aufgestellten Kriterien weiter durchzuführen.

Weiterhin kann vorgesehen sein, dass nach dem erstmaligen Feststellen eines Korrekturbedarfs nur eine oder wenige Personen sozusagen künstlich eine unterrepräsentierte Gruppe eingeordnet werden, dass aber das voreingestellte Prüfintervall in der Datenverarbeitungsanlage automatisch verkürzt wird, bis sich die gemessene Ist-Verteilung wieder an die Soll-Verteilung angenähert hat, und dass erst dann der vom Benutzer voreingestellte Wert für die Anzahl von Durchläufen wieder eingenommen wird.

Neben den Gruppenverteilungen, die an eine köperindividuelles Merkmal anknüpfen, kann eine Überlagerung eines rein zeit- und/oder zufallsgesteuerten Prozesses möglich sein, bei dem in der Datenverarbeitungseinrichtung nach Ablauf einer vorgegebenen Zeit oder einem maschinell berechneten Intervall oder einer zufälligen Personenzahl eine zusätzliche Handlung vorgenommen wird.

Im Falle der Anwendung des Verfahrens auf Probanden in wissenschaftlichen Studien kann dadurch eine zusätzliche Stichprobe gewählt werden.

Im Falle der Anwendung des erfindungsgemäßen Verfahrens kann dadurch ein einzelner Preis ausgespielt werden.

Es kann also eine zusätzliche Override-Funktion vorgesehen sein, mit welcher ein Bediener die maschinelle Musterzuordnung umgehen kann, beispielsweise wenn sich die gewünschte Gruppenverteilung und Ereigniszuordnung nicht oder nicht rechtzeitig einstellt, weil die Personengruppe zu klein ist oder das Verfahren nicht über eine ausreichend lange Zeit durchgeführt werden kann oder aus sonstigen Gründen vorzeitig beendet werden soll.

Für den Anwendungsfall einer Tombola mit einem Hauptgewinn wie einem Pkw heißt dies, dass der Hauptgewinn natürlich nur einer sehr kleinen Zielgruppe zugeordnet werden soll, die gemäß dem Grundverfahren in ihrer Größe nur dadurch begrenzt werden kann, dass bei einem biometrischen Identifikationsbild einer Person mehrere Grundmuster in bestimmter Kombination vorliegen müssen, um dann dieser Zielgruppe zugeordnet zu werden. Eine Zielgruppe, die nur genau 1 Element enthält, ist auf diese Weise kaum zu erreichen. Zudem ist meist ein bestimmter Zeitpunkt als Veranstaltungsende vorgesehen. Wenn zu diesem Zeitpunkt die Hauptgewinne noch nicht ausgespielt wären und verfallen würden, so ginge der Anreiz für die Zuschauer verloren, sich an künftigen Aktionen zu beteiligen. Daher ist es ratsam, die maschinelle Zuordnung vorübergehend zu übergehen und beschleunigt die entsprechenden Zielgruppen auszuspielen. Dies kann zeit- oder zufallsgesteuert erfolgen, und zwar entweder durch eine einfache Zuordnung einer bestimmten Menge von Zufallszahlen im Sinne einer einfachen Verlosung oder in gewichteten Zufallsgruppen, bei denen bestimmte relative Grüße wählbar sind

Auch eine zufällig zu schnelle Ausspielung der Hauptgewinne ist nachteilig, denn sie führt dazu, dass Zuschauer kein Interesse mehr daran haben werden, der Veranstaltung weiterhin beizuwohnen.

Eine zeit- und/oder zufallsabhängige Übersteuerung der maschinellen Zuordnung der biometrischen Merkmale ist also immer gerade dann geboten, wenn die Zuordnung zu den Zielgruppen für Teilnehmer einer Veranstaltung einsehbar ist, sprich: wenn sie sehen können, wer welchen Gewinn zu welchem Zeitpunkt erhält.

Eine Zufallssteuerung sollte demnach so gestaltet sein, dass zwar das biometrische Identifikationsbild über eine Leseeinrichtung erfasst wird, dass die Erfassung jedoch nur eine Zufallssteuerung in Gang setzt, die die Person dann direkt anhand eines Zufallswertes zu einer Zielgruppe hinzufügt, jedoch ohne Ansehung der realen biometrischen Merkmale. Der Zufallswert kann eine Zufallszahl sein, die frei der Person zugeordnet wurde.

Die Zufallssteuerung kann dabei so einstellbar sein, dass über gewichtete Wahrscheinlichkeiten dieselben angestrebten Zielgruppenverteilungen entstehen, wie bei der tatsächlichen Auswertung des biometrischen Identifikationsbildes.

Bei der Zeitsteuerung sollte es sich ähnlich verhalten. Auch hier initiiert also die Erfassung des biometrischen Identifikationsbildes lediglich eine Zeitsteuerung, bei der vor- oder nachgeschaltet abgefragt werden soll, ob für diesen Zeitpunkt ein oder mehrere andere Zuordnungen vorgesehen sind.

Dazu wird im System ein beliebiges Zeitintervall festgelegt, oder auch mehrere Intervalle, innerhalb dessen die Datenverarbeitungseinrichtung zufallsgesteuert einen Zeitpunkt oder mehrere Zeitpunkte festlegt, zu dem eine beliebige Person, die an oder nach dem zufällig ausgewählten Zeitpunkt am Scanner für die biometrischen Merkmale erscheint, einer speziellen Zielgruppe zugeordnet werden soll.

Im Falle des Gewinnspiels erfolgt zwar bei einer Person eine Erfassung des biometrischen Identifikationsbildes, der Rechner fragt aber vor oder nach dem Beginn des Analyseschritts zur erfindungsgemäßen Zielgruppenzuordnung beim Benutzer ab, ob nicht völlig unabhängig vom potenziellen Ergebnis der Analyse gerade im vorliegenden Zeitfenster ein Hauptgewinn ausgegeben werden soll. Sofern kein Hauptgewinn zu diesem Zeitpunkt ausgespielt werden soll, läuft das Verfahren nach seinem vorstehend beschriebenen Grundmuster weiter.

Das erfindungsgemäße Verfahren wird mit seinen vorteilhaften Ausgestaltungen nachfolgend anhand von Ausführungsbeispielen erläutert, wobei Bezug auf die als Fig. 1 bis 3b und 6 beigefügten Schemata wird. Dabei zeigen:
- Fig. 1: eine Vor- und Nachbereitungsprozedur, welche das Hauptprogramm umgibt, in Form eines Flussdiagramms,
- Fig. 2: den Ablauf des Hauptprogramms in einer einfachen Ausführungsform in Form eines Flussdiagramms;
- Fig. 3a, 3b: den Ablauf des Hauptprogramms in einer bevorzugten Ausführungsform in Form eines Flussdiagramms;
- Fig. 4: ein Balkendiagramm als Schemazeichnung für die Größenverteilung;
- Fig. 5: einen Fingerabdruck in einem Koordinatensystem in schematischer Draufsicht; und
- Fig. 6: den Ablauf der Prozedur gemäß Figur 3a in einer alternativen Ausführungsform und
- Fig. 7: eine Konfigurationsprozedur zur dem Verfahren nach Figur 6.

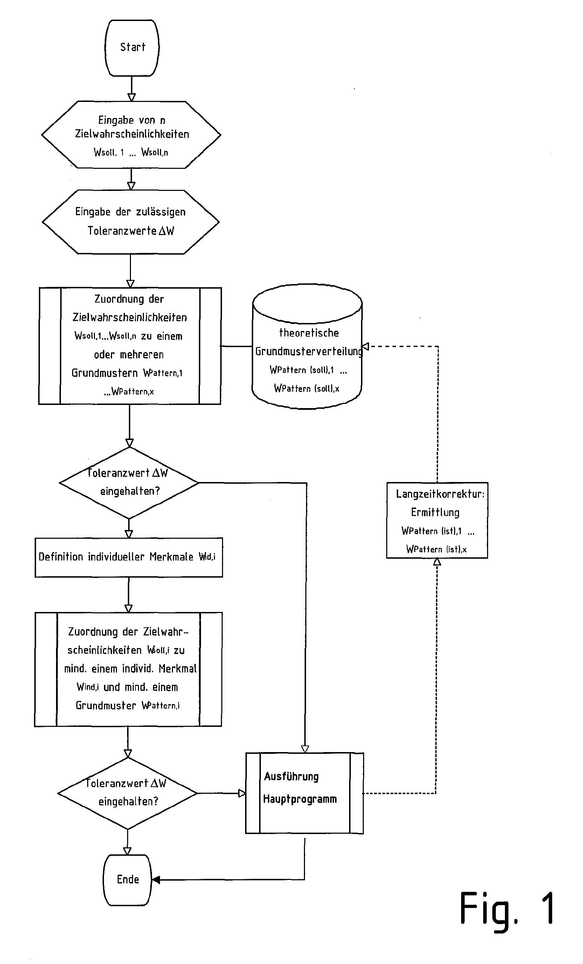

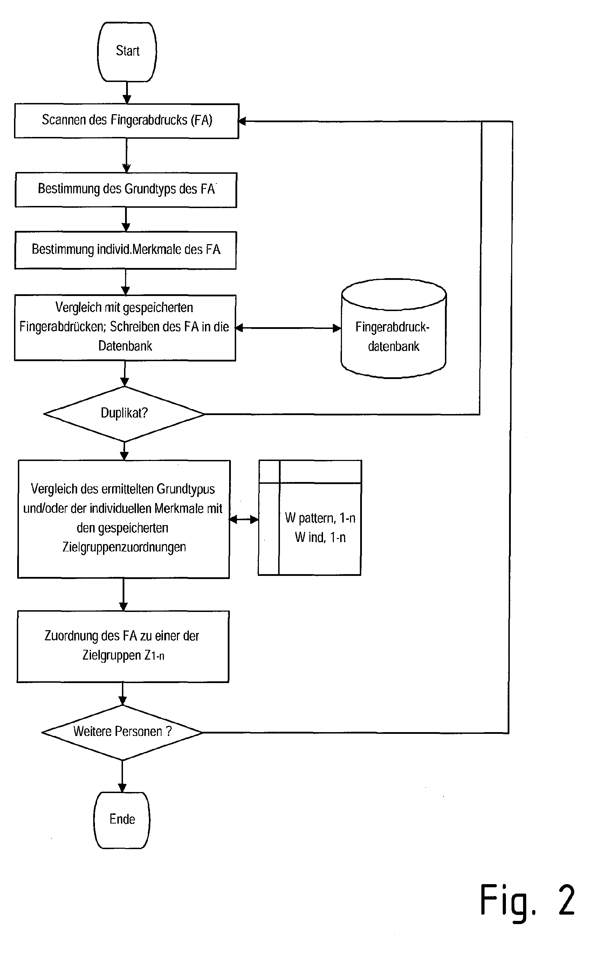

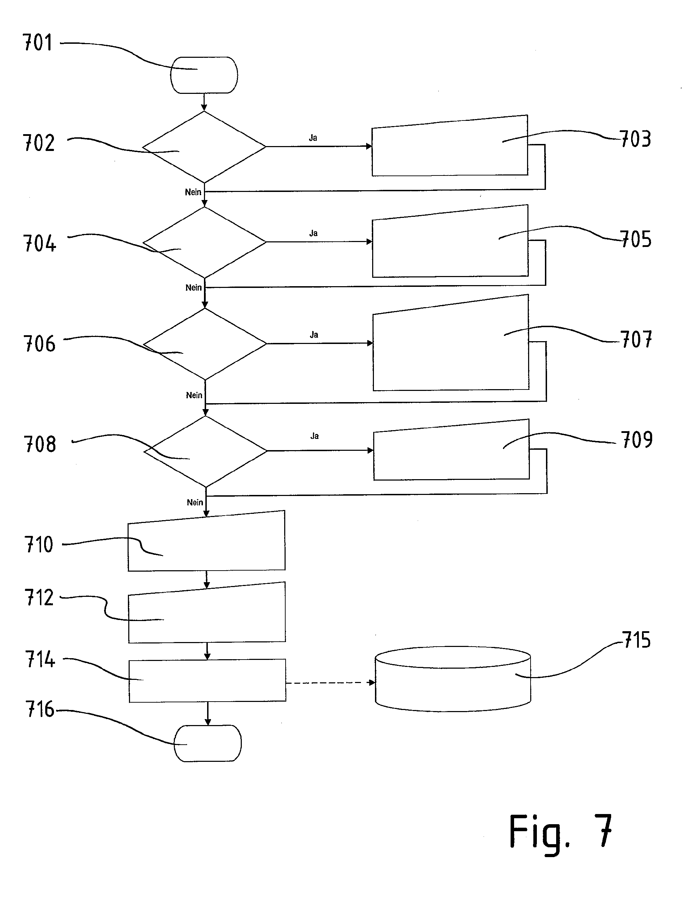

Ein Verfahren zur zufälligen Aufteilung einer Gruppe von Personen in mehrere Zielgruppe in seiner einfachsten Ausprägung besitzt vorzugsweise Vor- und Nachbereitungsprozeduren (vgl. Fig. 1, 7), zwischen denen die eigentliche Hauptprozedur (vgl. Fig. 2 und Fig. 3a-3b, 6) durchgeführt wird.

In dem beschriebenen Ausführungsbeispiel des erfindungsgemäßen Verfahrens wird ein Fingerabdruck (in den Flussdiagrammen als "FA" bezeichnet) als biometrisches Identifikationsbild erfasst und ausgewertet.

### I. Vorbereitungen

Zunächst werden Vorbereitungen getroffen, welche Benutzereingaben erfordern:
Es wird die relative Größe der Zielgruppen innerhalb der Gesamtgröße der Gruppe von Personen definiert, indem eingangs des Verfahrens durch eine Benutzereingabe in der verwendeten Datenverarbeitungsanlage zunächst eine Anzahl von n gewünschten Zielwahrscheinlichkeiten W_{soll*,i} definiert wird und dann jeder Zielwahrscheinlichkeit W_{soll*,i} ein prozentualer Verteilungswert zugeordnet wird, welcher der gewünschten relative Größe der jeweiligen Zielgruppe Zᵢ innerhalb der Gesamtgruppe Z₁₋ₙ entspricht.

Der Benutzer wird ferner aufgefordert, einen Toleranzwert ΔW einzugeben oder einen vorgeschlagenen Toleranzwert ΔW zu bestätigen. Der Toleranzwert ΔW gibt prozentual oder in Prozentpunkten an, um wieviel die jeweilige gewünschte Zielgruppenwahrscheinlichkeit W_{ist,i} von derjenigen Verteilung W_{soll,i} abweichen darf, die anhand von zugeordneten Grundmustern oder individuellen Merkmalen zu erwarten ist.

Anschließend wird in einem eigenen iterativen Prozess ein Zusammenhang zwischen den gewünschten Zielgruppenwahrscheinlichkeiten W_{soll*,i} und den aus dem Fingerabdruck maschinell ableitbaren Merkmalen hergestellt. Dies sind zum einen die fünf Grundtypen und zum anderen die individuellen Merkmale, die sogenannten Minuzien.

Die aus der Daktyloskopie bekannten Grundtypen nach der HENRY-Klassifikation sind (vgl. A. Senior: "A HIDDEN MAR-KOV FINGERPRINT CLASSIFIER" in: "In proceedings of the 31st Asilomar conference on Signals", Systems and Computers, 1997, pp 306-310.):
- rechter Bogen (*right arch*), der mit einer Wahrscheinlichkeit W_{pattern,1} von etwa 31,7% auftritt;
- linker Bogen (*left arch*) mit W_{pattern,2} = 33,8%;
- Wirbel (*whorl*) mit W_{pattern,3} = 27,9%;
- Flacher Bogen (*arch*) mit W_{pattern,4} = 3,7% und
- Gewölbter Bogen (*tented arch*) mit W_{pattern,5} = 2,9%.

Ein sechster Grundmustertyp W_{pattern,6} kann im erfindungsgemäßen Verfahren definiert werden, um nicht kategorisierbare Fingerabdrücke aufzufangen.

Werden mehr als n=6 Zielgruppen gewünscht, dann kann das Verfahren in seiner einfachen Ausprägung nicht durchgeführt werden, sondern es müssen zusätzliche Differenzierungen vorgenommen werden, die bei weiteren vorteilhaften Ausführungsformen des erfindungsgemäßen Verfahrens in dem Abschnitt "Hauptprogramm Typ 3" beschrieben werden.

Wählt der Benutzer sechs Zielgruppen Z₁₋₆ mit einer gewünschten Zielgruppenwahrscheinlichkeit, die etwa den oben aufgeführten Auftretenswahrscheinlichkeiten der Grundmuster W_{pattern,i} entspricht, dann kann die Zuordnung ganz einfach dadurch festgelegt werden, dass 1:1 die Grundmuster W_{pattern,i} auf die Zielgruppen Zᵢ abgebildet werden.

Wenn die aufgrund der bekannten Grundmusterverteilung theoretisch zu erwartenden Wahrscheinlichkeiten W_{soll,i} im Toleranzfeld der gewünschten Zielgruppenverteilungen W_{soll*,i} liegen, dann ist das Vorverfahren abgeschlossen und das Hauptprogramm kann gestartet werden.

Die Toleranzschwelle, mit der die möglichen Verteilungen W_{soll,i} von den vom Benutzer gewünschten Verteilungen W_{soll*,i} abweichen, kann so groß sein wie die schon zuvor definierte Toleranzwerte, die beim Aufstellen der Gruppenzuordnungen maßgeblich waren. Sie können aber auch abweichend definiert werden.

Sind die Toleranzfelder auf diese Weise nicht erreichbar, werden in der Datenverarbeitungseinrichtung zunächst Kombinationen der Grundmusterwahrscheinlichkeiten W_{pattern,1-n} durchlaufen und geprüft, ob mit solchen Kombinationen die gewünschte Verteilungen W_{soll*,1-n} erreichbar sind. Gleiches gilt, wenn weniger Zielgruppen definiert werden als es Grundmustertypen gibt. Auch dann wird maschinell geprüft, ob mit einer Zusammenfassung von zwei oder mehr Grundmusterwahrscheinlichkeiten Wₚₐₜₜₑᵣₙ das gewünschte Wₛₒₗₗ erreichbar ist.

Führt auch dies nicht zum Erfolg, werden neben den Grundmustern weitere individuelle Merkmale am Fingerabdruck herangezogen. Es wird dann das relevante Kriterium, aufgrund dessen ein Fingerabdruck einer bestimmten Zielgruppe zugeordnet wird oder eben nicht, durch die Kombination einer oder mehrere Grundmuster mit den zusätzlichen individuellen Merkmalen gebildet. Dieses spezielle Vorverfahren wird im Folgenden noch näher erläutert.

### II. Hauptprogramm Form 1

Das Hauptprogramm innerhalb des Verfahrens wird an dem eingangs bereits angeführten Beispiel erklärt, bei dem die Ausgangsgruppe eine Gruppe von Personen ist, die eine Verkaufsstätte besuchen und zur Teilnahme an einem Gewinnspiel eingeladen werden.

Zu Beginn des Verfahrens sind die Zielgruppenwahrscheinlichkeiten definiert worden, was für das Anwendungsbeispiel bedeutet, dass die relative Größe der Gewinnklassen festgelegt ist.

Beispielsweise kann festgelegt werden, einen Gewinn der ersten Klasse Z₁ mit einer Wahrscheinlichkeit von 3% auszuspielen, einer zweiten Klasse Z₂ von 4%, einer dritten Klasse Z₃ von 30% usw., wobei in der Restgruppe Z₄, die die größten relative Größe besitzt und die verbleibenden 63% umfasst, Trostpreise ausgespielt werden oder auch eben keine Gewinne ausgegeben werden. Als Toleranz wird beispielsweise eine Abweichung von ΔW=10% bezogen auf den genannten Wert Wₛₒₗₗ zugelassen.

Die in der Vorbereitungsprozedur definierten Zuordnungen lauten demnach:

| Zielgruppe Z₁ | W_{Soll,1} (Toleranzfeld) | Zugeordnetes Grundmuster | Wₚₐₜₜₑᵣₙ, | |
|---|---|---|---|---|
| Z₁ | 3% (2,7...3,3%) | gewölbter Bogen | 2,9%. | |
| Z₂ | 4% (3,6%...4,4%) | flacher Bogen | 3,7% | |
| Z₃ | 30% (27% ...33%) | Wirbel | 27,9% | |
| Z₄ | 63% (56,7 ... 69,3%) | rechter Bogen | 31,7% | > = 65,5% |
| | | linker Bogen | 33,8% | |
| | | (nicht kategorisierbar) | ? | |

In der in Fig. 2 skizzierten Hauptprozedur des Verfahrens in seiner einfachsten Ausführungsform werden die teilnehmenden Personen dann eingeladen, ihren Finger auf ein Fingerabdrucklesegerät zu legen. In dem Fingerabdrucklesegerät wird der Fingerabdruck optisch erfasst, dann in einem Modul innerhalb des Fingerabdrucklesegeräts oder eines zusätzlichen Computers analysiert und einem der 5 Grundtypen von Fingerabdruckmustern oder der Auffangklasse zugeordnet.

In einem anschließenden Verarbeitungsschritt wird die Person aufgrund der Einordnung ihres Identifikationsbildes in eine der Grundmustergruppen W_{pattern, i} einer der Zielgruppen zugeordnet.

Die Grundmuster "rechter Bogen" und "linker Bogen" sind mit den nicht kategorisierbaren zusammengefasst, also mit einer logischen ODER-Funktion verknüpft. Der Gruppe Z₄ werden also alle erfassten Fingerabdrücke zugeordnet, die das Grundmuster "rechter Bogen" oder "linker Bogen" aufweisen oder die eventuell nicht lesbar sein sollten.

Es wird anschließend die zu der Zielgruppe gehörende Handlung durchgeführt, beispielsweise wird durch die Datenverarbeitungsanlage automatisch ein entsprechender Gewinngutschein ausgestellt. Anschließend kann die Prozedur mit weiteren Personen beliebig oft wiederholt werden.

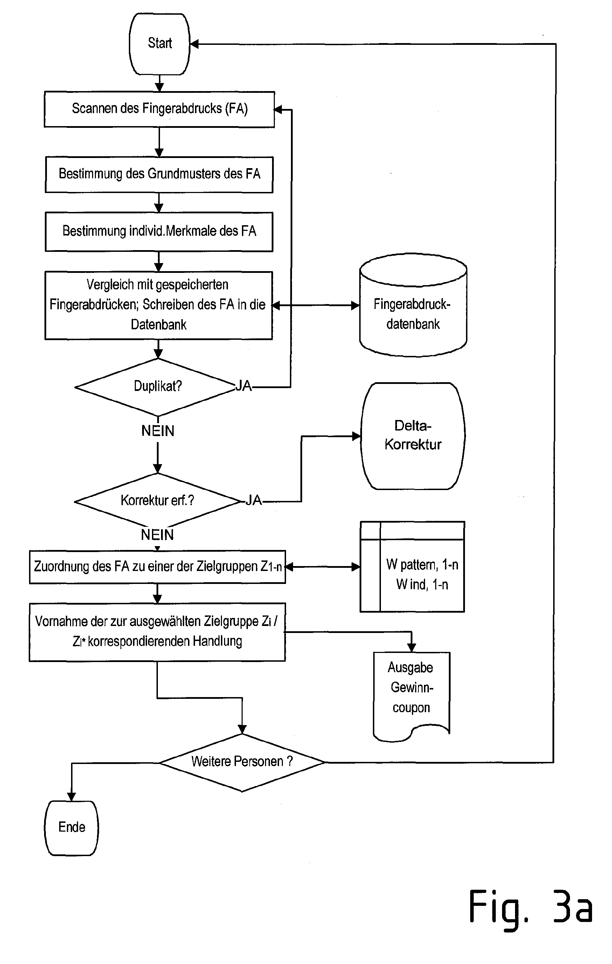

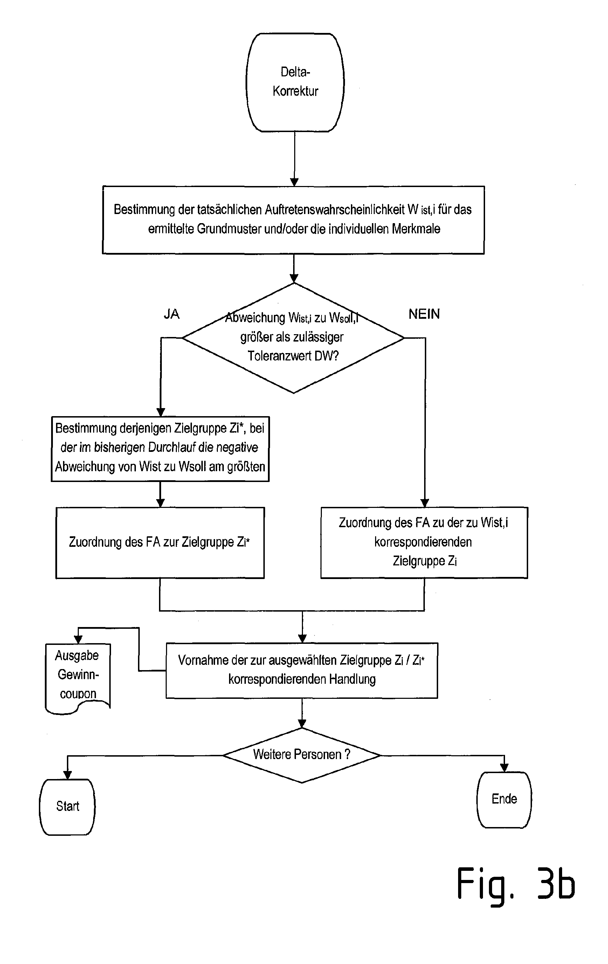

Die Figuren 3a und 3b stellen das bevorzugte Verfahren nach der Erfindung dar. Der in Fig. 3a dargestellte erste Teil entspricht bis zur Duplikatprüfung der zuvor anhand von Figur 2 beschriebenen Vorgehensweise. Danach schließt sich eine Verzweigung an, an der geprüft wird, ob schon eine Anzahl von Durchläufen erfolgt ist und somit eine Korrekturprüfung durchgeführt werden soll. Wenn nicht, wird der Durchlauf wie in dem Verfahren nach Fig. 2 auch zu Ende geführt.

Wenn eine Korrekturprüfung geboten ist, dann schließt sich unmittelbar der in Fig. 3b dargestellte zweite Teil an, in welchem ein hier als Delta-Korrektur bezeichneter computergesteuerter Eingriff umgesetzt wird, um die Zielgruppenverteilungen W_{soll,i} zu erreichen.

Dazu wird zunächst das Maß der Abweichung bestimmt. Verglichen wird die tatsächliche Größe W_{ist,i} derjenigen Zielgruppe Zᵢ, in die der Fingerabdruck nach Auswertung des Grundmusters und/oder seiner individuellen Merkmale eigentlich einzuordnen wäre, mit der vorgegebenen Größe W_{soll,i} für eben diese Zielgruppe.

Wird festgestellt, dass der Betrag einer zulässigen Abweichung ΔW überschritten wird, dann greift die Datenverarbeitungseinrichtung automatisch in den Ablauf ein, indem Sie die ursprüngliche Zielgruppenzuordnung, die aufgrund des erfassten Grundmusters und/oder der erfassten individuellen Merkmale gelten würden, überschreibt.

Dazu werden die Abweichungen aller tatsächlichen im bisherigen Verfahren gemessenen Auftretenswahrscheinlichkeiten W_{ist,i} zu den jeweiligen Soll-Werten W_{soll,i} für die Zielgruppen berechnet.

Sodann wird bevorzugt diejenige Zielgruppe herausgegriffen, bei der die gemessene Abweichung vom Betrag her am größten ist und die als negative Abweichung ermittelt wird. Dies bedeutet praktisch, dass diese Zielgruppe kleiner ist, als sie eigentlich sein sollte. Durch aktives Zuführen von Teilnehmern in diese unterrepräsentierte Zielgruppe wird sie quasi aufgefüllt, bis sich Ist- und Sollwert angleichen und die zulässige Toleranz wieder eingehalten wird.

Die bisherige Beschreibung des erfindungsgemäßen Verfahrens stellte Fälle da, bei denen die gewünschten Größen der Zielgruppen Wₛₒₗₗ entweder im Rahmen der zulässigen Toleranz mit den Grundmuster-Verteilungen Wₚₐₜₜₑᵣₙ übereinstimmte oder wo durch eine iterativ zu ermittelnde Kombination verschiedener Grundmusterklassen eine Annäherung an die gewünschten Größenverteilung zu erzielen war.

Werden die Größen der Zielgruppen vom Benutzer jedoch so gewählt, dass auf diese Weise durch Auswertung der Grundmuster allein keine Zuordnung erzielt werden kann oder werden mehr Zielgruppen definiert als es überhaupt Grundmusterklassen gibt, dann ist es erforderlich, die am Fingerabdruck zusätzlich aufgetretenen individuellen Merkmale mit heranzuziehen.

Diese individuellen Merkmale, die in der Daktyloskopie als Minuzien bezeichnet werden, sind beispielsweise bestimmte charakteristische Verzweigungsstellen, wo sich Papillarlinien gabeln oder wiedervereinigen oder wo Einschlüsse in einer Papillarlinie vorhanden sind.

Die Tatsache des Auftretens eines oder mehrerer Minuzien stellt bereits ein zusätzliches Unterscheidungsmerkmal an sich dar. Zusätzlich kann die topographische Lage der Minuzie im Gesamtbild des Fingerabdrucks herangezogen werden oder es kann am Ort der Minuzie eine Tangente an die Papillarlinie angelegt werden und deren Winkel in Bezug auf ein festes Koordinatensystem ermittelt werden.

Mithilfe der zusätzlich definierten individuellen Merkmale wird ein Zusatz-Kriterium eingeführt, um erfasste Fingerabdrücke einer bestimmten Zielgruppe zuzuordnen. Bevorzugt wird dabei auf die Grundmuster aufgesetzt. Erst wenn mit einer Kombination von Grundmustern einerseits und individuellen Merkmalen andererseits keine Kriterien definierbar sind, um die gewünschten Zielgruppengrößen zu erreichen, kann im Rahmen des Verfahrens auch dazu übergegangen werden, die Zuordnung allein aufgrund der Häufigkeit, der Lage oder der Winkelausrichtung des jeweiligen individuellen Merkmale und Papillarlinien zu definieren.

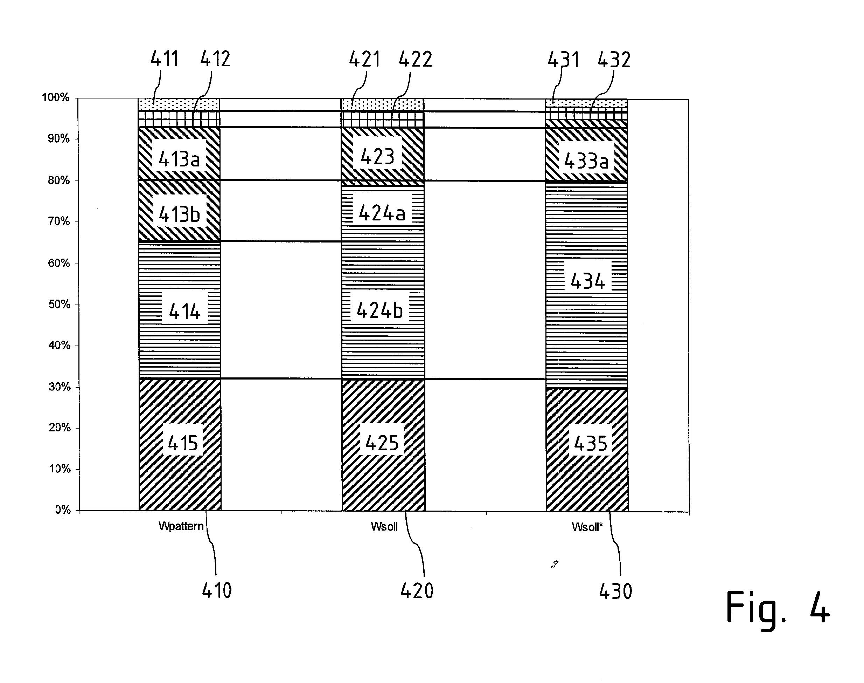

Figur 4 zeigt drei Säulen 410, 420, 430 mit jeweils 100% an. Die Blöcke 421...425 in der linken Säule 410 entsprechen der natürlich vorbestimmten Relativverteilung Wₚₐₜₜₑᵣₙ unter den fünf Grundmustern von Fingerabdrücken. Die teilweise als sechste Klasse hinzugenommene Auffangklasse für nicht kategorisierbare Abdrücke ist in diesem Fall nicht gezeigt.

Die rechte Säule 430 enthält die vom Benutzer gewünschte Zielgruppenverteilung W_{soll*} für fünf Zielgruppen 1 - 5

Die mittlere Säule 420 stellt die vom Computer schließlich berechnete machbare Zielgruppenverteilung Wₛₒₗₗ dar. Die kleinen Abweichungen, welche in Figur 4 zwischen den zu unterst liegenden Blöcken 415, 435 sowie bei den kleinen, oben liegenden Blöcken 411, 431 und 412, 432 zu erkennen sind, liegen entweder in dem vom Benutzer vorgegebenen Toleranzbereich, oder aber der Benutzer wird diesbezüglich aufgefordert, diese kleinen Abweichungen trotz Überschreitung seiner festgelegten Toleranz entweder zu akzeptieren oder aber die Definitionen nochmals neu generieren zu lassen.

Wird das sog. Delta-Korrekturverfahren angewandt, so kann die Korrektur der verbleibenden Abweichungen von der Wunschvorstellung auch im Laufe des Verfahrens nachkorrigiert werden.

Im dargestellten Beispiel tritt die größte Abweichung zwischen der natürlichen Auftretenswahrscheinlichkeit eines Grundmusters der Klasse Nr. 3 und der benutzerseitig gewünschten Größe der zugeordneten Zielgruppe Nr. 3 bei den mittleren Blöcken 413, 423 und 414, 424 auf.

Um dies auszugleichen, wird nach dem Algorithmus, der dem Verfahren in dieser bevorzugten Ausführungsform zugrunde liegt, der Block 414 als Teilmenge entsprechend Block 424b vollständig der Zielgruppe Nr. 4 zugeordnet. Außerdem wird der Block 413 so aufgeteilt, dass die eine Hälfte 413b noch mit dem Block 414 verknüpft wird, so dass eine Teilmenge entsprechend dem Block 424a der Zielgruppe Nr. 4 zugeschlagen wird und schließlich die vierte Zielgruppe eine dem Block 424 in der mittleren Säule 420 entsprechende Größe besitzt.

Die um die untere Hälfte 413b entsprechend gekürzte Restgruppe 413a entspricht schließlich der Zielgruppe Nr. 3, die in den Diagramm nach Figur 4 als Block 423 dargestellt ist.

Die Darstellung in Form von Blöcken dient hier nur der Veranschaulichung. Die Verteilungen können im Rahmen der Interaktion mit dem Benutzer zwar auch in dieser Weise visualisiert werden, was aber zur Durchführung des Verfahrens nicht unbedingt notwendig ist. Die tatsächliche Aufteilung der Gruppen erfolgt in der Datenverarbeitungsanlage rein rechnerisch, nicht aber geometrisch.

Um die in Figur 4 illustrierte Aufteilung einer Grundmuster-(Pattern-)Gruppe in Teilgruppen vorzunehmen, wird beim Auftreten dieser Grundmustergruppe ein zweites, individuelles Merkmal als zusätzliche Bedingung herangezogen, was einer logischen UND-Verknüpfung entspricht.

Bei dem vorliegenden Beispiel wurde die Klasse des Grundmusters Nr. 3 hälftig aufgeteilt. Für die zusätzlich einzuführende Bedingung muss also eine Verteilung von 50:50 für das erfüllte zusätzliche Merkmal oder das nichterfüllte Merkmale gegeben sein. Hierzu kann beispielsweise die Anzahl (gerade / ungerade) der Merkmale herangezogen werden.

### Beispiel:

Damit der erfasste Fingerabdruck der Zielgruppe 4 zuzuordnen ist, muss er
a) entweder der Grundmuster-Klasse Nr. 4 zuzuordnen sein
   ODER
b) er ist der Grundmuster-Klasse Nr. 3 zuordnen, jedoch in diesem Fall nur dann, wenn er zusätzlich auch (logisches UND) eine gerade Anzahl von Verzweigungen der Papillarlinien aufweist.

Wenn der erfasste Fingerabdruck der Grundmuster-Klasse Nr. 3 entspricht UND zugleich eine ungerade Anzahl von Verzweigungen der Papillarlinien aufweist, dann ist er hingegen der Zielgruppe Nr. 3 zuzuordnen.

Die Zählung von Merkmalen und die Unterscheidung nach gerader/ungerader Anzahl stellt die einfachste Möglichkeit dar, ein individuelles Merkmal hinzuzufügen, um eine Grundmusterklasse hälftig zu teilen.

Sofern andere Aufteilungen als 50:50 erforderlich sind, muss auf Rasterungen zurückgegriffen werden. Hierzu kann das erfasste Identifikationsbild in mehrere Sektoren eingeteilt werden, die entweder auf einem kartesischen Koordinatensystem beruhen, also rechteckig sind, oder auf einem Polarkoordinatensystem.

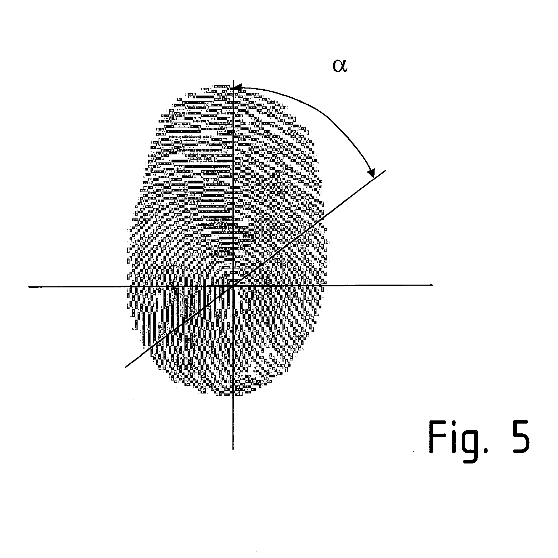

Figur 5 zeigt das Abbild eines Fingerabdrucks. Das Zentrum des Koordinatensystems wurde durch die Erkennungssoftware automatisch auf einen charakteristischen Punkt des Fingerabdrucks gelegt.

Die absolute Lage und Winkelausrichtung des Fingerabdrucks im Koordinatensystem ist für das vorliegende Verfahren ohne Bedeutung, da ja nur eine Zufallsauswahl anhand der Merkmale des Fingerabdrucks getroffen werden soll und eine Wiedererkennung des Fingerabdrucks nicht unbedingt erforderlich ist, sofern nicht eine Duplikatprüfung gewünscht ist.

Durch das eingeblendete Koordinatensystem sind vier Quadranten gebildet, so dass für das Auftreten bestimmter Merkmale in einem der Quadranten eine theoretische Wahrscheinlichkeit von 25 % besteht. Dadurch kann eine Grundmusterklasse im Verhältnis 75:25 oder auch 50:50 aufgeteilt werden.

Weiterhin ist in Figur 5 eine Tangente an die charakteristische Stelle angelegt, z.B. den Punkt der größten Krümmung. Deren Winkel α im Koordinatensystem kann ebenfalls als Unterscheidungshilfe herangezogen werden, indem man entsprechend fein unterteilte Winkelgruppen bildet.

Will man beispielsweise eine Aufteilung von 1/6 zu 5/6 oder 1/3 zu 2/3 anhand dieses zusätzlichen Merkmals erreichen, dann kann der Vollkreis in sechs Sektoren von je 60° bzw. 3 Sektoren mit je 120° unterteilt werden. Um die Zuordnung vorzunehmen, wird dann geprüft, in welchen Sektor die Tangente fällt.

### II. Hauptprogramm Form 2

Die bisher vorgestellten Verfahrensvarianten waren:
1.) Prüfung auf Wahl der Größen W_{soll,i} der Zielgruppen Zᵢ ähnlich den natürlichen Häufigkeiten des Auftretens der Grundmuster;
2.) Automatische Prüfung der Möglichkeit der Zusammenfassung mehrerer Grundmusterklassen W_{pattern,i} und Zuordnung zu einer Zielgruppe Zᵢ zur Erreichung der gewünschten Größenverteilungen W_{soll,i}.
3.) Automatische Hinzuziehung individueller charakteristische Merkmale zur Aufteilung einzelner oder mehrerer Grundmusterklassen und Kombination der aufgeteilten Grundmusterklassen mit anderen Grundmustern; dabei Rückgriff auf Anzahl, Lage und Ausrichtung bestimmter charakteristischer Merkmale, Bildung eines geeigneten Rasters.

Mit diesen zuvor beschriebenen Verfahren sind bereits sehr genaue Zielgruppenverteilungen zu erreichen.

Ein gewisser Nachteil der zuvor beschriebenen Verfahren kann auch darin gesehen werden, dass nicht jedes Grundmuster eines Fingerabdrucks überhaupt die Möglichkeit hat, bestimmten Zielgruppen zugeordnet werden zu können, wenn die Grundmuster blockweise aufgeteilt werden.

Ist nur die einmalige Teilnahme einer Person an dem Aufteilungsverfahren vorgesehen, so fällt dieser Nachteil nicht wesentlich ins Gewicht. Sollte aber Personen die mehrfache Teilnahme ermöglicht werden, dann werden diese Person automatisch immer denselben oder sehr ähnlichen Zielgruppen bzw. Gewinnklassen zugeordnet werden, welche eben mit dem Grundmuster ihres Fingerabdrucks verknüpft sind.

Da sich - im Falle der Verfahrensanwendung bei einem Gewinnspiel - gerade die natürlicherweise sehr gering besetzten Grundmusterklassen für die Zuordnung zu den oberen Gewinnrängen eignen, würde dies bedeuten, dass Personen, deren Fingerabdruck einem seltenen Grundmuster entspricht, immer wieder die Hauptgewinne erhalten, wohingegen der Rest der Personen, welche eines der Grundmuster besitzen, die durchschnittlich mit circa 30 % auftreten, dann immer nur in den unteren Rängen oder ganz außerhalb der Gewinnsränge eingruppiert werden würden.

Um diesen Nachteil zu begegnen, wird nachfolgend eine weitere Variante des erfindungsgemäßen Verfahrens beschrieben, bei der wiederum eine Rasterung oder Segmentierung vorgenommen wird. Dies aber nicht nur mit dem Ziel, die gewünschten Zielgruppengrößen definieren zu können, sondern eben auch, um aus jedem Grundmustertypen Unterbereiche heraus zu lösen und von jedem Grundmustertyp Untermengen einer bestimmten Zielgruppe zuzuordnen.

Dieses Verfahren wird wie nachfolgend beschrieben durchgeführt:
- In der Vorprozedur wird jedem Grundmuster gemäß der erwarteten Wahrscheinlichkeit des Auftretens eine Menge von Ganzzahlen zugeordnet (z.B. Fingerabdruck des Types "Schleife" = 1-28, "Wirbel" = 29-45, usw.), deren Summe 100 ergibt.
- Um jedem Grundmuster die Zugriffsmöglichkeit auf alle Gewinne zu erlauben werden die Grundmusterblöcke in einprozentige Teile zerlegt und dann zufällig den Gewinnen zugeordnet, so dass z. B Gewinn der Kategorie 1 mit 30% Gewinnchance aus sechs Werten besteht, die dem Grundmuster "Schleife" zugeordnet sind, plus 5 Werten aus "Wirbel" ... etc. Dazu muss der Gewinn allerdings mit mehr als 6% definiert sein wegen der sechs Eingabe-Grundmuster, ansonsten ist dies nicht möglich.
- In der Hauptprozedur wird ein Fingerabdruck analysiert und dessen Grundmuster samt den ermittelten individuellen Merkmalen als Eingabeparameter an die Gewinn ermittelnde Prozedur übergeben.
- Es werden nun die Primfaktoren des dem Grundmuster zugeordneten Werts errechnet (z.B. für "Schleife": 28 = 2 * 2 * 7) und gemäß der Primfaktoren eine weitere Zerlegung vorgenommen.
- Wenn der kleinste Primfaktor 2 ist, so wird die Anzahl der Merkmale als Entscheidungsgrundlage genutzt:
   o Ist die Anzahl gerade, so wird die untere Hälfte der Eingabemenge zurückgegeben, ansonsten die obere (1-14 bzw. 15 - 28).
   o Bei jedem nachfolgenden Durchgang wird der Fingerabdruck in zwei gleichgroße Segmente unterteilt bzw. geviertelt, geachtelt etc. Oder es wird ein Segment zufällig ausgewählt und es wird dort die gerade/ungerade Anzahl der Merkmale analog zum ersten Durchgang als Kriterium herangezogen.
- Sollte der kleinste Primfaktor ungleich 2 sein, so werden die Winkelausrichtungen der Merkmale betrachtet:
   o Der Vollkreis wird in eine Anzahl von Segmenten (=Faktor) entsprechend dem Primfaktor unterteilt und das Segment zurückgeliefert, das die meisten Merkmale zugeordnet hat. Die Zuordnung eines Merkmals zu einem Segment geschieht dann, wenn der Winkel des Merkmals in dem des Segments liegt (z.B. Primfaktor 7: 360' / 7 = 51,42° pro Segment, also 0-51,42°, 52,43° - 102,85°, ...)
   o Sollte diese Berechnung keinen eindeutigen Rückgabewert haben (2 oder mehr Segmente mit der selben Anzahl von Merkmalen) so wird dasjenige Segment ermittelt, dessen durchschnittlicher Merkmalswinkel am nächsten zum mittleren Winkel des Segments liegt (z.B. Segment 1: mittlerer Winkel = 25,71°, Segment 2: mittlerer Winkel = 42,01° ,...)

Auf diese Weise wird aus der Menge (z.B. Typ "Schleife": 1-28, z.B. Ergebnis 21) ein Wert ermittelt. Dieser legt nun den zugeordneten Gewinn fest.

Falls die Delta-Korrektur nicht nötig ist, also bei keinem Gewinn (keiner Zielgruppe) ein Abweichungswert ΔW (z.B. 10%) überschritten wurde, so wird der Gewinn ausgespielt, ansonsten wird wiederum derjenige Gewinn ausgespielt, der die größte negative Abweichung besitzt, also zu selten ausgespielt wurde.

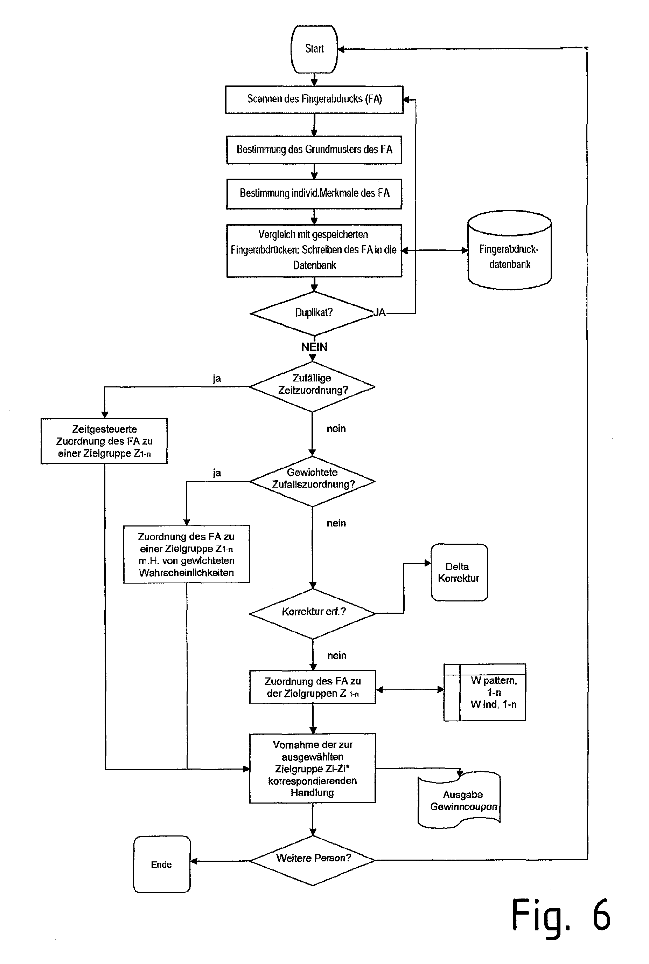

Fig. 6 zeigt einen Ablauf, der weitgehend dem in Fig. 3a dargestellten grundsätzlichen Ablauf entspricht.

Nach den Vorbereitungen, die bevorzugt auch eine Duplikatprüfung einschließen, kann die Zuordnung der aus den Fingerabdrücken ermittelten Merkmale zu den Zielgruppen direkt eine bestimmte Handlung vorgenommen werden bzw. die Person direkt einer der Zielgruppen zugeordnet werden, und zwar
a) in Form gewichteter Wahrscheinlichkeiten, z. B. auf Basis einer der Person zugeordneten Zufallszahl oder
b) zeitgesteuert,
wie oben in der Beschreibungseinleitung bereits ausführlich dargelegt wurde.

Fig. 7 zeigt die Schritte bei der Konfiguration vor dem Start des Hauptprogramms in der Variante nach Figur 6. Beginnend am Startpunkt 701 erfolgt zunächst eine Benutzerabfrage in Bezug auf die alternativen Zuordnungen, die zeit- oder zufallsabhängig gesteuert eine Person einer bestimmten Zielgruppe zuordnen können.

An einer Verzweigungsstelle 702 wird der Benutzer aufgefordert, mitzuteilen, ob eine einfache Zufallssteuerung erforderlich ist. Dies ist beispielsweise sinnvoll, wenn eine bestimmte Gruppe sehr klein sein soll, also während einer Veranstaltung nur ein einziges Mal oder wenige Male eine Person diese Zielgruppe zugeordnet werden soll. Bei Gewinnspielen bezieht sich diese Variante vor allem auf die Ausspielung des sogenannten Hauptgewinns. Wenn die einfache Zufallssteuerung gewünscht ist, erfolgt im Modul 703 die Konfiguration durch Abfrage entsprechender weiterer Parameter.

Im nächsten Verzweigungspunkt 704 wird abgefragt, ob eine gewichtete Zufallssteuerung erforderlich ist. Wenn ja, werden im Konfigurationsmodul 705 die Anzahl der gewünschten Zielgruppen und deren relative Größe abgefragt. Diese können gleich mit den musterabhängigen Verteilungen sein, aber auch unabhängig davon definiert sein.

Weiterhin wird im Punkt 706 abgefragt, ob eine Zeitsteuerung gewünscht ist. Wenn ja, werden im Konfigurationsmodul 707 folgende Parameter abgefragt und gespeichert:
So erhält der Benutzer die Möglichkeit, Start- und Endzeit von Zeitintervallen anzugeben, so dass beispielsweise die Zeitsteuerung zwischen 12 Uhr und 16.30 Uhr aktiv ist.

Weiterhin ist die Anzahl von einfachen zufallsgesteuerten Zuordnungsprozessen pro Zeitintervall anzugeben. Diese Zahl kann also beispielsweise der Anzahl der zu vergebenden Hauptgewinne entsprechen. Werden beispielsweise drei solcher Ereignisse festgelegt, dann wird die zeitgesteuerte Prozedur beendet, wenn alle drei Hauptgewinne ausgespielt sind.

Weiterhin können zu der gewünschten Anzahl von zufallsgesteuerten Zuordnungsprozessen von vornherein Uhrzeiten zufällig ausgewählt werden. Hat der Benutzer beispielsweise im Schritt vorher eine Zahl von drei Ereignissen ausgewählt, so werden rechnergesteuert drei Uhrzeiten festgelegt, zu denen eine bestimmte Zielgruppenzuordnung erfolgen soll. Diejenige Person, die direkt an dem zufällig ausgewählten Zeitpunkt an dem Verfahren teilnimmt oder unmittelbar darauf, wird der speziellen Zielgruppe zugeordnet.

Praktisch bedeutet dies, dass bei der zeit- und/oder zufallsabhängigen Steuerung die Person ihr biometrische Identifikationsbild bestimmen lässt, beispielsweise durch Scannen des Fingerabdrucks. Tatsächlich erfolgt jedoch immer dann, wenn einer der zufallsgesteuerten Uhrzeiten erreicht ist, gar keine Auswertung der biometrischen Merkmale, sondern die Person wird direkt der speziellen Zielgruppe zugeordnet.

Weiterhin wird in dem in Fig. 7 dargestellten Ablauf bei 708 abgefragt, ob die Zuordnung einer Person zu den Zielgruppen anhand biometrischer Identifikationsmerkmale, welche den Kern der vorliegenden Erfindung bildet, durchgeführt werden soll oder ob dies fallweise übergangen werden soll. Falls die Zuordnung anhand der biometrischen Merkmale gewünscht ist, erfolgt im Konfigurationsmodul 709 die Abfrage der entsprechenden Parameter, wie oben unter "I. Vorbereitungen" beschrieben.

Im Punkt 710 kann der Benutzer eine Rangfolge der an den Punkten 702, 704, 706 ,708 abgefragten Verfahrensvarianten festlegen. Er kann sich beispielsweise dafür entscheiden, den Zuordnungsprozess anhand der biometrischen Merkmale als primär anzugeben, so dass die übrigen Prozesse nur dann greifen, wenn z. B. wegen einer nicht ausreichend langen Durchführungszeit des Hauptprogramms und/oder einer zu kleinen Personengesamtheit sich die gewünschten Zielgruppengrößen nicht oder nicht rechtzeitig einstellen.

Weiterhin kann er sich dafür entscheiden, in den Zeiten, die in der Zeitsteuerung als Intervalle angegeben sind, nur eine rein zufallsabhängige Zuordnung vornehmen zu lassen, um so Zeiten besonders starker Aufmerksamkeit auf einer Veranstaltung zu nutzen und die gewünschten Zielgruppenzuordnungen zu erhalten, während dann während der übrigen Zeiten der Zuordnungsprozess anhand der biometrischen Merkmale abläuft, um beim Großteil der beteiligten Personen eben die gewünschten Zielgrößen rein zufällig anhand der biometrischen Merkmale zu erhalten.

Mit der Speicherung der Konfiguration an dem Punkt 714 in einem Datenspeicher 715 wird das Ende 716 der Konfigurationsprozedur zum Hauptprogramm erreicht.

## Patentansprüche

1. Verfahren zur Aufteilung einer Gruppe von Personen in mehrere Zielgruppen Z₁₋ₙ, wobei die Gesamtgröße der Gruppe unbestimmt sein kann und wobei die relative Größe W_{soll,i} der Zielgruppen Zᵢ vorbestimmbar ist,
mit folgenden Schritten:
1.1. Eingabe einer gewünschten relativen Größe W_{soll*,i} jeder Zielgruppe Zᵢ in einer Menge von n Zielgruppen Z₁₋ₙ in eine Datenverarbeitungseinrichtung; und:
1.2.
a) Auswahl einer Gruppe von Grundmustern, welche einem aus einem bei den Personen mittels wenigstens einer elektronischen Leseinrichtung erfassbaren Identifikationsbild ableitbar sind und Ermitteln eines Standardverteilungswerts W_{pattern,1-n} für die Anzahl und/oder die topographische Lage und/oder Ausrichtung der jeweiligen Grundmuster in dem Identifikationsbild aus einem ersten Datenspeicher; und
b) Verknüpfen wenigstens eines Grundmusters aus einer Gruppe von n Grundmustern mit jeweils einer Zielgruppe Zᵢ durch ein in der Datenverarbeitungsanlage laufendes Optimierungsverfahren, bei welchem
i. Konfigurationen von Zuordnungen einzelner Grundmuster zu einzelnen Zielgruppen und/oder Kombinationen mehrerer Grundmuster zu einer Zielgruppe gebildet werden;
ii. jeweils eine relative Soll-Verteilung W_{soll,1-n} für jede Zielgruppe Z₁₋ₙ aus den aus dem ersten Datenspeicher abgerufenen Standardverteilungswerten W_{pattern,1-n} der Grundmuster berechnet wird;
iii. die Abweichungen der berechneten Soll-Verteilungen W_{soll,1-n} von den vom Benutzer gewünschten Soll-Verteilungen W_{soll*,1-n} berechnet werden;
iv. diejenige Konfiguration von Zuordnungen der Grundmuster zu den Zielgruppen ausgewählt wird, bei welcher die berechneten Abweichungen am kleinsten sind; und:
c) Erfassen eines biometrischen Identifikationsbilds bei der Person mittels einer elektronischen Leseinrichtung; Prüfen des Identifikationsbilds auf Übereinstimmung mit wenigstens einem der Grundmuster und Zuordnen der Person zu derjenigen Zielgruppe Zi, welche mit dem jeweiligen Grundmuster verknüpft ist;
und/oder:
1.2 Erfassen eines biometrischen Identifikationsbilds bei der Person mittels einer elektronischen Leseinrichtung und Zuordnen einer Zufallszahl, Zuordnung der Person zu derjenigen Zielgruppe Zi, welche mit dem jeweiligen Grundmuster verknüpft ist, anhand der Zufallszahl.
und/oder:
1.3 Erfassen eines biometrischen Identifikationsbilds bei der Person mittels einer elektronischen Leseinrichtung und Prüfung auf Vorliegen eines Ereigniszeitpunkt tᵢ* für eine Zielgruppe Zᵢ*, Zuordnung der Person zur Zielgruppe Zᵢ*.

2. Verfahren nach Anspruch 1, **dadurch gekennzeichnet, dass** nach Beendigung der Aufteilung der Gruppe die tatsächlich gemessenen Häufigkeiten W_{pattern,i} des Auftretens der jeweiligen Grundmuster in den ersten Datenspeicher geschrieben werden.

3. Verfahren nach Anspruch 1 oder 2, **dadurch gekennzeichnet, dass** während der laufenden Aufteilung der Gruppe die jeweilige Anzahl von Personen in der Zielgruppen Zᵢ in einem zweiten Datenspeicher fortgeschrieben wird und wobei die Abweichungen zwischen der gemessenen relativen Größen jede Zielgruppe W_{ist,i} und den Soll-Verteilgrößen W_{soll,i} ermittelt werden, wobei bei Unterschreiten eines zulässigen Toleranzwerts ΔW die Person derjenigen Zielgruppe Zᵢ zugeordnet wird, welche mit dem bei ihr ermittelten Grundmuster verknüpft ist und wobei bei Überschreiten eines Toleranzwerts ΔW die Person derjenigen Zielgruppe Zⱼ zugeordnet wird, bei welcher die größte negative Abweichung ΔW besteht.

4. Verfahren nach einem der Ansprüche 1 bis 3, **dadurch gekennzeichnet, dass** bei einer Anzahl n von Zielgruppen, die kleiner als die Zahl der möglichen Grundmuster ist, in der Datenverarbeitungseinrichtung die Grö-βen W_{pattern,i} von mehreren Grundmuster miteinander kombiniert werden, dass die für die jeweiligen Kombinationen berechneten Verteilungen mit den gewünschten Zielgruppenverteilungen W_{soll*,i} verglichen werden und die Kombinationen von Grundmustern ausgewählt und mit den Zielgruppen verknüpft werden, bei denen die Abweichungen zwischen den berechneten Verteilungen W_{soll,i} mit den gewünschten Zielgruppenverteilungen W_{soll*,i} im Toleranzfeld liegt.

5. Verfahren nach einem der Ansprüche 1 bis 4, **dadurch gekennzeichnet, dass** bei einer Anzahl n von Zielgruppen, die kleiner als die Zahl der möglichen Grundmuster ist, in der Datenverarbeitungseinrichtung Konfigurationen von Verknüpfungen von Grundmustern mit Zielgruppen iterativ geprüft werden, bei welchen die Grö-βen W_{pattern,i} von mehreren Grundmustern miteinander kombiniert werden, wobei die für die jeweiligen Kombinationen berechneten Verteilungen mit den gewünschten Zielgruppenverteilungen W_{soll*,i} verglichen werden und wobei diejenige Kombination ausgewählt und einer Zielgruppe zugeordnet wird, bei der die Abweichungen zwischen den berechneten Verteilungen W_{soll,i} mit den gewünschten Zielgruppenverteilungen W_{soll*,i} am geringsten sind.

6. Verfahren nach wenigstens einem der Ansprüche 1 bis 5, **dadurch gekennzeichnet, dass** bei die Zuordnung des Identifikationsbilds der Person zu einer Zielgruppe Zᵢ anhand biometrischer Merkmale vorübergehend ausgesetzt und durch eine zeit- und/oder zufallsgesteuerte Zuordnung ersetzt wird.

7. Verfahren nach wenigstens einem der Ansprüche 1 bis 6, **dadurch gekennzeichnet, dass** bei Abweichungen der berechneten Zielgruppenverteilungen W_{soll,i} mit den gewünschten Zielgruppenverteilungen W_{soll*,i}, die außerhalb des Toleranzfelds liegen, oder bei bestehenden Abweichungen zu einem bestimmten Zeitpunkt während des Verfahrensdurchlaufs die Zuordnung des Identifikationsbilds der Person zu einer Zielgruppe Zᵢ anhand biometrischer Merkmale vorübergehend ausgesetzt und durch eine zeit- und/oder zufallsgesteuerte Zuordnung ersetzt wird.

8. Verfahren nach einem der Ansprüche 1 bis 7, **dadurch gekennzeichnet, dass** in dem Identifikationsbild die Anzahl und/oder die topographische Lage in einem Raster und/die oder Ausrichtung wenigstens eines Zusatzmerkmals bestimmt wird.

9. Verfahren nach Anspruch 8, **dadurch gekennzeichnet, dass** eine Kombination eines Grundmusters und wenigstens eines Zusatzmerkmals gebildet und die Kombination mit einer der Zielgruppen Zᵢ verknüpft wird.

10. Verfahren nach einem der Ansprüche 1 bis 9, **dadurch gekennzeichnet, dass** als Identifikationsbild ein Fingerabdruck verwendet wird und die elektronische Leseeinrichtung ein Fingeraberdruckscanner ist.

11. Verfahren nach Anspruch 10, **dadurch gekennzeichnet, dass** die Grundmuster den fünf Grundtypen von Fingerabdrücken entsprechen, für welche eine natürliche Grundmusterverteilung W_{pattern.1-5} gegeben ist.

12. Verfahren nach Anspruch 8 bis 11, **dadurch gekennzeichnet, dass** in das Identifikationsbild ein Raster gelegt wird, wobei die Anzahl der Rastereinheiten wenigstens der gewünschten Anzahl n von Zielgruppen Z₁₋ₙ entspricht und wobei jede Zielgruppe Zᵢ mit der Anzahl und/oder der Ausrichtung wenigstens eines Grundmerkmals und/oder eines Zusatzmerkmals in wenigstens einer zugeordneten Rastereinheit verknüpft ist.
